Europäisches Patentamt

European Patent Office

Office européen des brevets

(11) Numéro de publication: **0 131 079**

**A1**

(12) # DEMANDE DE BREVET EUROPEEN

(21) Numéro de dépôt: **83401385.6**

(22) Date de dépôt: **06.07.83**

(51) Int. Cl.⁴: **F 02 K 1/54**

(43) Date de publication de la demande:
**16.01.85 Bulletin 85/3**

(84) Etats contractants désignés:
**DE GB NL**

(71) Demandeur: **SOCIETE DE CONSTRUCTION DES AVIONS HUREL-DUBOIS**
**39 rue Grange Dame-Rose**
**F-92360 Meudon-la-Foret(FR)**

(72) Inventeur: **Kennedy, John Francis**
**6, square du Pont de Sèvres**
**F-92100 Boulogne Billancourt(FR)**

(72) Inventeur: **Fournier, Alain**
**34, rue Pierre Corby**
**F-92140 Clamart(FR)**

(74) Mandataire: **Sauvage, Renée**
**CABINET SAUVAGE 100 bis, avenue de Saint-Mandé**
**F-75012 Paris(FR)**

(54) **Inverseur de poussée à porte notamment pour moteur d'avion à réaction.**

(57) L'invention concerne les inverseurs de poussée pour moteur à réaction.

L'inverseur est constitué par une seule porte basculante (10) articulée autour de pivots (20) alignés sensiblement sur un diamètre du capotage extérieur (3). Un vérin (25) permet de faire basculer la porte en position d'inversion dans laquelle son bord extérieur (22) vient en butée contre le bord (21) correspondant du capotage fixe. L'ensemble du jet est dévié latéralement, la porte obturant la totalité du canal (8) dans lequel s'écoulent les jets chaud et froid du moteur.

Ce type d'inverseur est particulièrement applicable aux moteurs montés en configuration "nacelle latérale" et nacelle sous voilure.

Fig. 1

EP 0 131 079 A1

Inverseur de poussée à porte notamment pour moteur d'avion à réaction.

La présente invention concerne les inverseurs de poussée pour moteurs à réaction et notamment les moteurs à réaction destinés à équiper des avions. Plus particulièrement, l'invention a pour objet les inverseurs du type dit "à porte basculante". On connaît déjà (notamment par le brevet français n° 1 482 538 et par les demandes de brevets français n° 77 06360 déposée le 4 mars 1977 et 80 14907 déposée le 4 juillet 1980 tous deux au nom de la demanderesse), des inverseurs de poussée conçus pour des moteurs à double flux.

Les inverseurs décrits dans ces documents antérieurs comportent deux, trois ou même plus de trois portes basculantes formant, en position de croisière, des parties du capotage extérieur alignées avec la structure fixe du capotage, ces portes pouvant être amenées simultanément en position d'inversion de poussée de façon que chacune d'elles obture une partie de la section d'écoulement des gaz tout en libérant un espace latéral dans le capotage par lequel lesdits gaz sont déviés radialement vers l'extérieur.

Ces inverseurs de poussée connus peuvent être classés en deux catégories, à savoir :

- d'une part, ceux qui permettent la déviation d'une partie seulement du jet total et dans ce cas, les portes coopèrent par leur bord arrière avec l'enveloppe extérieure de la tuyère pour obturer uniquement le canal des gaz froids ; des inverseurs de ce type sont décrits particulièrement dans le brevet français 1 482 538.

- d'autre part, ceux qui assurent la déviation de la totalité du jet, comme dans les demandes de brevet 77 06360 et 80 14907 ; dans la demande 80 14907, la veine de gaz circule dans un canal annulaire entourant une structure fixe axiale et les portes obturent ce canal annulaire en coopérant par leur bord arrière avec la structure fixe axiale ; dans la demande 77 06360, on décrit deux portes basculantes symétriques par rapport à un axe diamétral, les bords arrière de ces deux portes venant en butée l'un contre l'autre, dans le plan axial du moteur et déviant la totalité

- 2 -

0131079

du jet de part et d'autre.

L'inverseur objet de la présente invention appartient à la deuxième catégorie en ce qu'il permet de dévier l'intégralité du jet de gaz. Ainsi l'inverseur selon l'invention est conçu pour un moteur à réaction comportant un capotage entourant une tuyère axiale, ce capotage présentant, au delà de l'extrémité arrière de la tuyère, un prolongement délimitant un canal circulaire, l'inverseur se caractérisant par le fait qu'il est constitué par une seule porte basculante de forme générale hémi-tronconique formée par une partie de la périphérie du capotage articulée autour d'un axe transversal à l'axe de la tuyère et voisin de celui-ci de façon à pouvoir évoluer sous l'action d'un moyen de commande entre une position escamotée (ou de croisière) dans laquelle ladite porte est dans le prolongement de la partie fixe du capotage et une position active (ou position d'inversion) dans laquelle le bord arrière de la porte est amené en butée contre la partie fixe opposée du prolongement du capotage, ladite porte s'étendant alors transversalement de part et d'autre de l'axe du canal circulaire qu'elle obture tout en dégageant dans le capotage un espace libre en aval de la tuyère pour permettre aux gaz de s'échapper radialement vers l'extérieur.

Les avantages d'un tel inverseur à porte unique sont particulièrement nombreux. Ainsi, sur le plan mécanique l'utilisation d'une seule porte permet de diminuer le nombre de pièces mécaniques mobiles, de simplifier la structure en évitant le mécanisme de synchronisation de commande nécessaire dans les inverseurs à plusieurs portes, de n'utiliser qu'un seul vérin d'actionnement attaquant directement la porte et une seule paire de pivots d'articulation. Il en découle un allègement de l'ensemble et une plus grande fiabilité de fonctionnement du système d'inverseur. Par ailleurs, du fait que la porte vient en butée contre la partie fixe du capotage en position d'inversion, les efforts supportés par la porte sont transmis à une structure non fragile et directement reliée au moteur, lui-même accroché à la cellule de l'avion. Ceci assure une meilleure tenue mécanique des éléments de l'inverseur.

Toutefois, l'inverseur de l'invention présente surtout deux avantages majeurs sur le plan aérodynamique. En effet, lorsque l'inverseur à une porte équipe un moteur double flux dans lequel le capotage forme avec la tuyère axiale un canal annulaire pour la circulation d'un jet froid annulaire qui s'écoule ensuite dans le canal circulaire situé en aval de la tuyère en entourant le jet chaud issu de celle-ci, l'ensemble du jet peut être dévié sans "éclater" sur la porte et par conséquent sous la forme d'une veine composite dans laquelle le jet chaud reste enveloppé et guidé par le jet froid. Ceci est un avantage notable par rapport à la disposition de la demande de brevet français 77 06360 dans laquelle le jet chaud heurte les portes dans l'axe du moteur avant d'être éjecté de part et d'autre. Avec la disposition selon l'invention, on évite l'éclatement du jet contre la porte mais surtout, du fait que seul le jet froid vient en contact avec celle-ci, on pourra utiliser pour la structure de porte un matériau qui n'aura pas besoin de résister à de hautes températures. On peut ainsi réaliser une économie non négligeable et un gain de masse.

Par ailleurs, des utilisations particulièrement intéressantes de l'inverseur de l'invention résident dans l'équipement de moteurs installés sur avion soit en configuration "nacelle latérale", c'est-à-dire par fixation au fuselage de l'avion par l'intermédiaire d'un mât horizontal, soit en configuration "nacelle sous voilure", c'est-à-dire par fixation à l'aile de l'avion par l'intermédiaire d'un mât vertical. Dans de telles configurations, la porte de chaque inverseur est située à l'opposé du mât de telle façon que le jet défléchi s'écoule horizontalement en s'écartant du fuselage. On évite ainsi toute interaction du jet inversé avec les surfaces de contrôle de l'avion (empennages par exemple) et avec le sol dans la phase de roulement pendant l'atterrissage. On diminue ainsi grandement la vitesse dite de réingestion, phénomène selon lequel le jet inversé déjà brûlé est à nouveau introduit dans le moteur (par déflexion sur le sol ou sur les surfaces de contrôle de l'avion), ce qui oblige à interrompre l'utilisation du système d'inverseur de poussée à cause du risque de détérioration du moteur. Le dispositif de l'invention en faisant disparaître ce risque permet d'obtenir un freinage particulièrement efficace de l'avion sur la piste en réduisant d'autant les distances nécessaires à l'atterrissage.

D'autres caractéristiques et avantages de l'invention apparaîtront dans la description suivante d'une forme de réalisation préférée de l'invention en référence aux dessins annexés dans lesquels :

        - la figure 1 est une vue schématique en coupe de la partie arrière d'un moteur double flux équipé d'un inverseur de poussée selon l'invention,

        - la figure 2 est une vue schématique en perspective éclatée de l'ensemble de la figure 1,

        - les figures 3 et 4 sont des vues en perspective montrant la porte dans les deux positions extrêmes,

        - la figure 5 est une vue en perspective depuis l'avant du moteur montrant la porte ouverte,

        - la figure 6 est un schéma représentant la circulation des gaz lors de l'inversion de poussée, et

        - la figure 7 est une vue de face schématique d'un avion équipé de deux moteurs montés en configuration "nacelle latérale", les portes étant en position d'inversion de poussée lors de l'atterrissage.

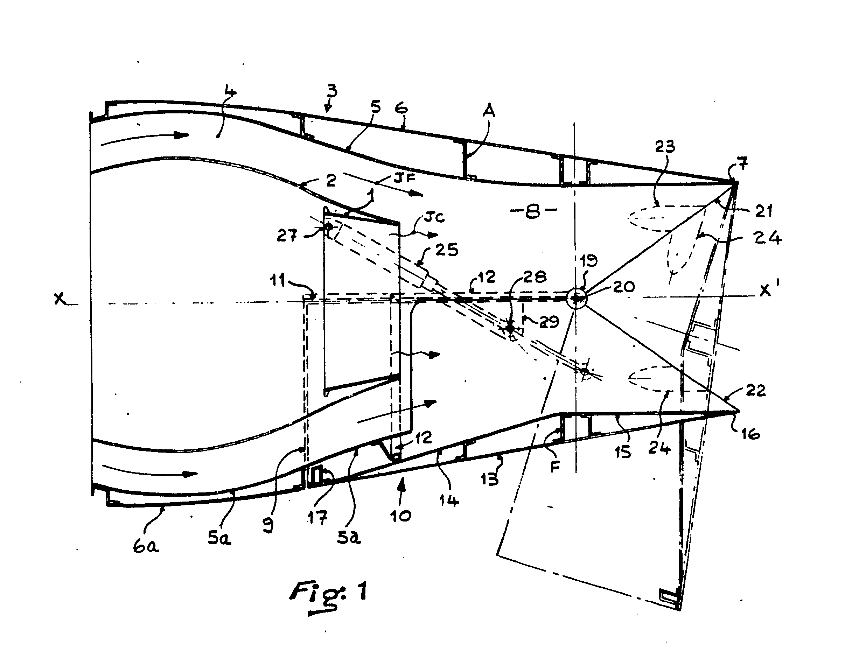

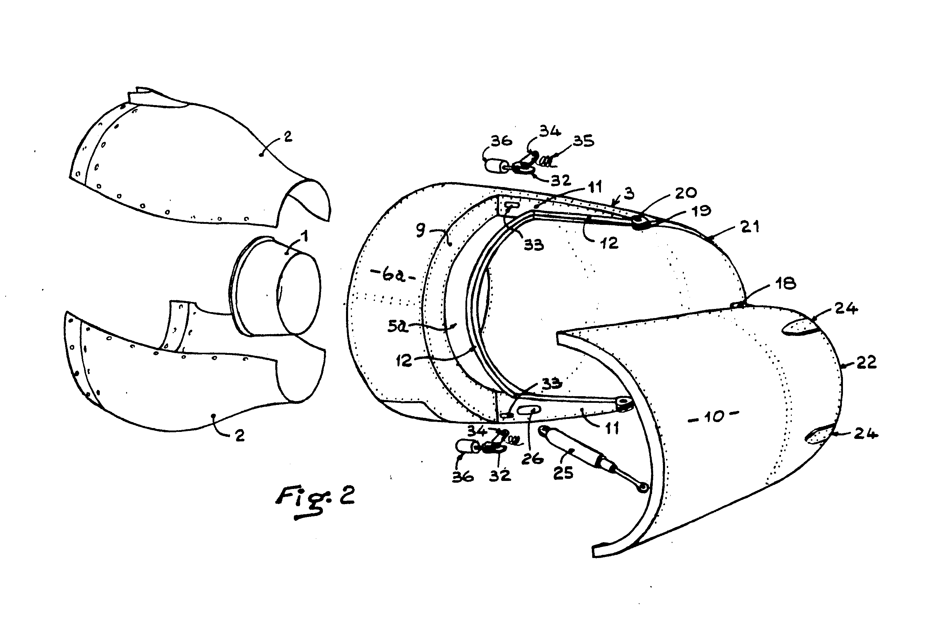

        Bien que l'inverseur de l'invention puisse équiper plusieurs types de moteurs à réaction, on en décrira ci-après une forme de réalisation préférée, mais non limitative conçue pour un moteur à réaction double flux destiné à être fixé au fuselage de l'avion selon une configuration dite "en nacelle latérale" comme on le voit particulièrement à la figure 7, par l'intermédiaire d'un mât horizontal M. Sur les figures 1 et 2, on a représenté en 1 la tuyère axiale terminant un corps de moteur classique non représenté et par laquelle sont éjectés d'amont en aval, selon les flèches JC, les gaz brûlés chauds.

Le corps du moteur et la tuyère 1 sont enveloppés par un capot primaire 2 en deux parties fixées au moteur.

Le capot primaire 2 est entouré par un capotage désigné de façon générale en 3 qui est fixé au moteur par tout moyen approprié non représenté. Il présente des parois interne 5 et externe 6 solidaires l'une de l'autre et renforcées par des raidisseurs intérieurs A. Ces parties 5 et 6 se rejoignent en 7 à leur extrémité arrière. La paroi interne 5 délimite avec le capot primaire 2 un canal annulaire 4 dans lequel circule, d'amont en aval selon la flèche JF, un jet froid provenant d'un ventilateur situé à l'avant du moteur (non représenté).

Le capotage s'étend vers l'arrière au-delà de la tuyère en constituant un canal circulaire 8 dans lequel s'écoule l'ensemble des deux jets froids et chauds.

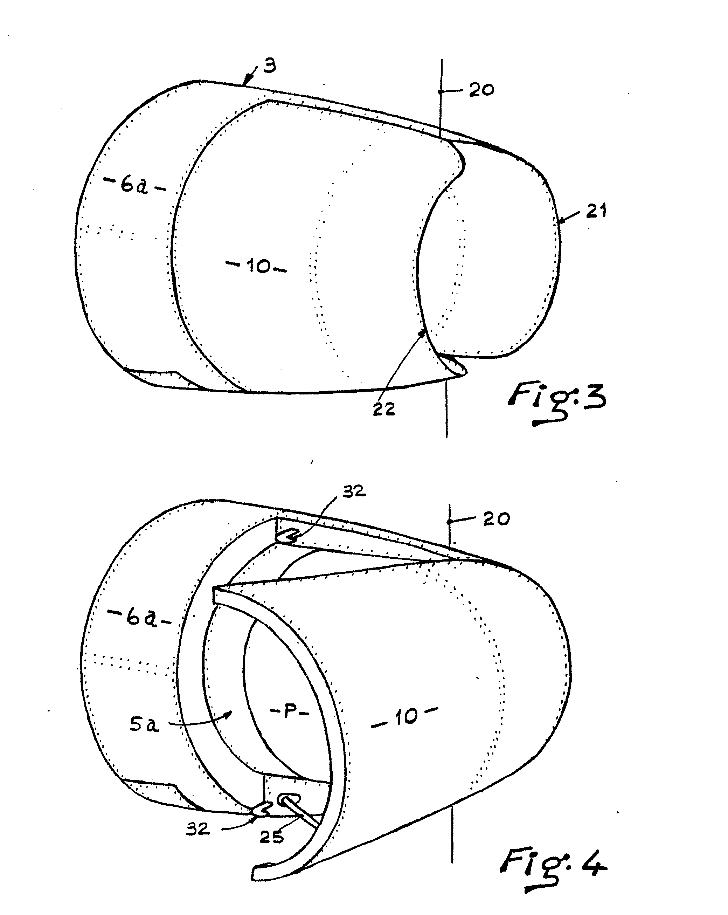

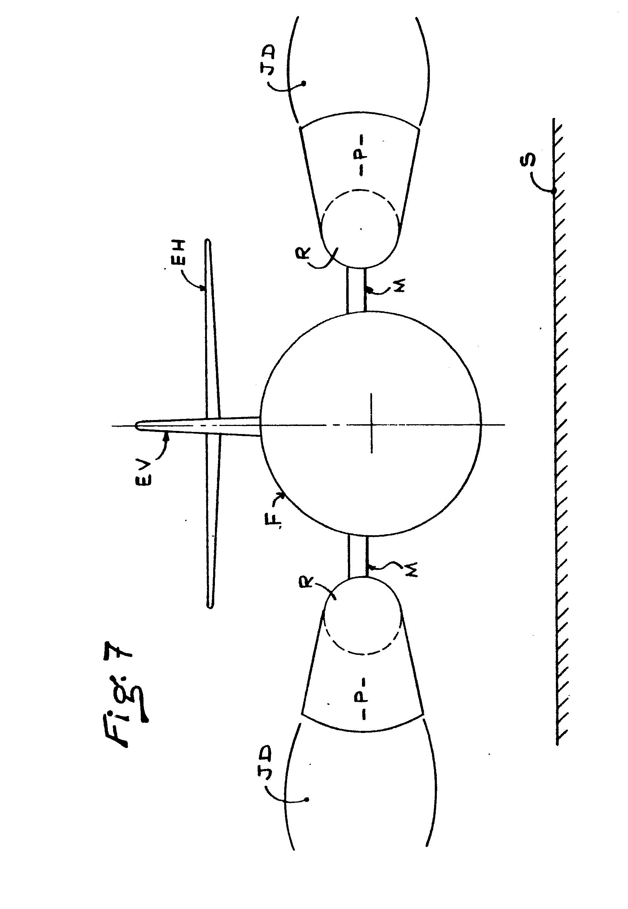

Sur la moitié de la périphérie arrière, le capotage présente une découpe ménageant une ouverture latérale P (figures 4 et 6) par laquelle les jets JC et JF sont destinés à être déviés par le mécanisme d'inversion de poussée. Dans la zone de cette ouverture, la partie 5a de la paroi intérieure 5 du capotage s'étend à peu près jusqu'au niveau de l'extrémité arrière de la tuyère, tandis que la partie 6a de la partie extérieure 6 est interrompue en amont de l'extrémité arrière de la tuyère, un cadre 9 reliant les parties 5a et 6a des parois. Deux poutres diamétralement opposées 11 délimitent les bords longitudinaux de l'ouverture P. Un joint d'étanchéité (par exemple en forme de note de musique) est fixé le long de l'arête de la partie 5a et des poutres 11.

En position normale de croisière, l'ouverture P est obstruée par une porte basculante désignée de façon générale en 10. Cette porte présente une forme générale hémi-tronconique et elle est formée par une partie de la périphérie du capotage. Plus précisément, elle est constituée d'une paroi externe 13 et d'une paroi interne dont la partie 14 est convergente en direction de l'axe X-X' du moteur et donc la partie d'extrémité 15 est cylindrique ou légèrement divergente. Les deux parois sont raidies par les cadres internes F et solidarisées par leurs bords internes et externes 16 jointifs. Le bord amont de la porte présente, en outre, un épaulement en saillie 17 destiné à faciliter la déviation du jet vers l'avant lorsque la porte est en position d'inversion.

A chaque extrémité de son bord arrière 16, la porte présente une oreille 18 (figure 2) qui est engagée de façon tourillonnante autour d'un pivot 20 dans une des chapes 19 prévues aux extrémités correspondantes du bord arrière 21 du capotage fixe. Comme on le voit à la figure 1, la chape 19 et les oreilles 18 sont disposées sur un axe commun aux pivots 20 perpendiculaire à l'axe X-X' du moteur et voisin d'un diamètre du capotage. Les bords 21 et 22 de la partie fixe du capotage et de la porte sont de forme sensiblement identique et symétrique par rapport à l'axe X-X'. Leur forme correspond à une section de la partie aval de la paroi 5 par un plan incliné sur l'axe X-X'. De cette manière, l'axe 20 de pivotement de la porte se trouve entre l'extrémité de la tuyère et le point le plus extérieur du capotage fixe. Il en résulte pour l'extrémité du capotage une forme bien caractéristique à deux échancrures diamètralement opposées lorsque la porte 10 est escamotée dans la position de la figure 3.

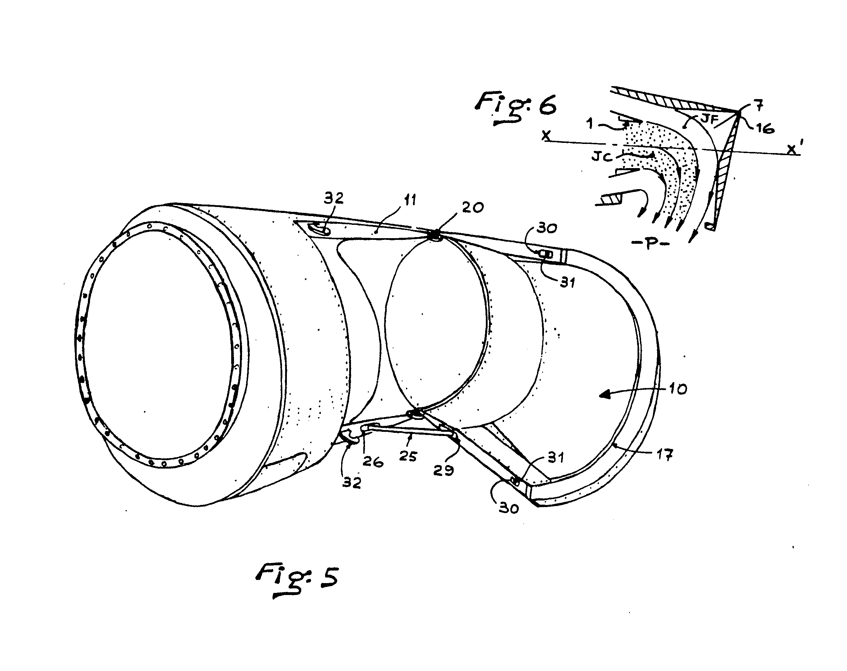

Quand la porte 10 est basculée dans sa position d'inversion représentée en trait interrompu à la figure 1 (voir également les figures 4 et 5), le bord 22 de la porte vient en butée contre le bord 21 du capotage fixe, la porte s'étendant alors transversalement de part et d'autre de l'axe du canal 8 et l'obstruant en libérant l'ouverture latérale P, la partie amont de la porte faisant saillie vers l'extérieur afin de guider le jet dévié comme on le voit à la figure 6. Les bords 21 et 22 pourront être avantageusement renforcés par des ferrures 23 et 24 (figures 1 et 2) fixées sur les parois externes.

La commande de la porte est obtenue dans la forme de réalisation représentée par un seul vérin à double effet dont la tige est articulée par rotule sur un axe 28 situé dans un logement 26 (figure 2) ménagé dans la partie fixe du capotage. Comme on le voit sur la figure 5, le vérin s'étend en biais par rapport à l'axe X-X' du moteur et de part et d'autre de la poutre 11 qu'il traverse. L'axe d'articulation 28 est situé entre l'axe de basculement 20 de la porte et le bord amont de celle-ci.

Naturellement, le système de commande de porte représenté n'est nullement limitatif et l'on pourrait prévoir, par exemple, deux vérins 25 situés respectivement au niveau de chacune des poutres 11 ; de même on pourrait remplacer les vérins par tout autre système de commande approprié. Afin d'assurer le maintien de la porte en position escamotée, on prévoit par ailleurs un mécanisme de verrouillage de porte constitué par des crochets 32 montés dans les logements 33 des poutres 11 au voisinage du cadre 9 de l'ouverture dans le capotage, ces crochets étant articulés sur des pivots 34 et sollicités en position de fermeture par des ressorts 35, leur ouverture étant obtenue par des vérins à simple effet 36 attelés aux crochets. Ces crochets sont destinés à s'enclencher automatiquement sur les rebords 31 des ouvertures 30 lorsque la porte 10 vient en position escamotée.

La figure 6 illustre un des avantages de l'inverseur de l'invention en montrant comment, du fait que l'éjection des gaz se produit par une seule ouverture latérale, on obtient un guidage homogène du jet sans éclatement de celui-ci, le jet froid JF entourant continuellement le jet chaud central JC. De la sorte, le jet froid protège la porte de l'action du jet chaud, ce qui permet d'utiliser une structure dite de "porte froide".

La figure 7 montre, quant à elle, que l'éjection latérale des jets défléchis JD évite toute interférence tant avec les structures de l'avion et notamment l'empennage horizontal EH, qu'avec le sol S lors de l'atterrissage. Il

0131079

en résulte que ce système d'inversion peut demeurer plus longtemps en action lorsque l'avion roule sur le sol sans entraîner de risque d'ingestion de gravillons par le moteur, ce qui peut se produire avec les structures d'inverseurs classiques.

Il est bien entendu que l'invention n'est pas limitée à des moteurs montés dans la configuration de la figure 7. Elle peut s'appliquer également pour des moteurs installés en "pod" sous la voilure d'avions bi-moteur. Dans ce cas, les jets seraient également déviés vers l'extérieur et les mêmes avantages (absence d'interaction avec les structures de l'avion et le sol) seraient obtenus.

REVENDICATIONS

1- Inverseur de poussée pour moteur à réaction comportant un capotage entourant une tuyère axiale, ledit capotage présentant, au-delà de l'extrémité arrière de la tuyère, un prolongement délimitant un canal circulaire, caractérisé en ce que l'inverseur est constitué par une seule porte basculante (10) de forme générale hémi-tronconique formée par une partie de la périphérie du capotage (3) articulée autour d'un axe (20) transversal à l'axe de la tuyère (X-X') et voisin de celui-ci de façon à pouvoir évoluer sous l'action d'un moyen de commande (25) entre une position escamotée (ou de croisière) dans laquelle ladite porte est dans le prolongement de la partie fixe du capotage et une position active (ou position d'inversion) dans laquelle le bord arrière (22) de la porte (10) est amené en butée contre la partie fixe opposée du prolongement du capotage, ladite porte (10) s'étendant alors transversalement de part et d'autre de l'axe X-X' du canal circulaire (8) qu'elle obture tout en dégageant dans le capotage un espace libre (P) en aval de la tuyère (1) pour permettre aux gaz de s'échapper radialement vers l'extérieur.

2- Inverseur de poussée selon la revendication 1, caractérisé en ce que la porte hémi-tronconique présente, outre un bord arrière (22), d'une part, un bord avant (17) et, d'autre part, deux bords longitudinaux qui, en position de croisière, sont sensiblement parallèles à l'axe longitudinal de la tuyère.

3- Inverseur de poussée selon les revendications 1 et 2 prises ensemble, caractérisé en ce que la porte (10) en position escamotée, s'étend sur environ la moitié de la périphérie du capotage.

4- Inverseur de poussée selon l'une quelconque des revendications 1 à 3, caractérisé en ce que les pivots d'articulation (20) de la porte (10) sont situés entre l'extrémité arrière de la tuyère (1) et l'extrémité arrière (7) du capotage.

5- Inverseur de poussée selon l'une quelconque des revendications 1 à 4, caractérisé en ce que le bord arrière de la porte et la zone de la partie fixe contre laquelle ce bord est destiné à venir en butée sont de forme complémentaire, les plans 21-22 qu'ils définissent respectivement se coupant au niveau de l'axe des pivots 20 de la porte 10.

6- Inverseur de poussée selon l'une quelconque des revendications 3 à 5, caractérisé en ce que le moyen de commande de la porte est constitué par un vérin à double effet (25) articulé d'une part sur la structure fixe du capotage et, d'autre part, sur un des bords longitudinaux de la porte en une zone située entre le pivot d'articulation (20) et le bord avant (17) de la porte.

7- Inverseur de poussée selon la revendication 6, caractérisé en ce que le vérin (25) s'étend dans un plan sensiblement perpendiculaire à l'axe de pivotement de la porte, les extrémités articulées du vérin étant situées de part et d'autre du plan délimité par les bords latéraux de la porte.

8- Inverseur de poussée selon l'une quelconque des revendications précédentes, caractérisé en ce que, en position escamotée, la porte est maintenue verrouillée par deux crochets (32) diamètralement opposés montés respectivement dans la structure fixe du capotage et destinés à coopérer avec des moyens d'accrochage complémentaire (31) prévus aux extrémités avant des bords latéraux de porte, ces crochets étant sollicités élastiquement en position de verrouillage et accouplés à un vérin simple effet assurant leur ouverture pour libérer la porte.

9- Inverseur de poussée selon l'une quelconque des revendications précédentes, caractérisé en ce que le bord avant de la porte en position escamotée est situé en amont du bord arrière de la tuyère axiale.

10- Inverseur de poussée selon l'une quelconque des revendications précédentes caractérisé en ce que le bord arrière de la porte et la zone de la partie fixe du capotage avec laquelle il coopère sont renforcés localement par des ferrures (24) et (23).

11- Inverseur de poussée selon l'une quelconque des revendications précédentes, caractérisé en ce qu'il est appliqué à un moteur double flux dans lequel le capotage forme avec la tuyère axiale un canal annulaire (4) pour la circulation du jet froid JF qui s'écoule ensuite dans le canal circulaire (8) avec le jet chaud sortant de la tuyère avant d'être éjecté, ledit inverseur déviant ainsi la totalité des jets chaud et froid radialement vers l'extérieur.

12- Inverseur de poussée selon l'une quelconque des revendications 1 à 11, caractérisé en ce qu'il est destiné à équiper un moteur installé sur avion en configuration "nacelle latérale" par l'intermédiaire d'un mât sensiblement horizontal fixé au fuselage, la porte basculante étant située à l'opposé du mât et son axe d'articulation étant orienté à peu près verticalement de telle façon que le jet défléchi s'écoule dans une direction générale horizontale et vers l'extérieur.

13- Avion comportant deux moteurs en configuration "nacelle latérale" équipés respectivement d'un inverseur de poussée à porte unique selon l'une quelconque des revendications 1 à 12, les portes des inverseurs étant situées symétriquement en opposition par rapport au fuselage de l'avion.

14- Inverseur de poussée selon l'une quelconque des revendications 1 à 11, caractérisé en ce qu'il est destiné à équiper un moteur installé sur avion en configuration sous voilure par l'intermédiaire d'un mât sensiblement vertical fixé à l'aile, la porte basculante étant située à l'opposé du fuselage par rapport au mât et son axe d'articulation étant orienté à peu près verticalement de telle façon que le jet défléchi s'écoule dans une direction générale horizontale et vers l'extérieur.

15- Avion comportant deux moteurs en installation sous voilure équipés respectivement d'un inverseur de poussée à porte unique selon l'une quelconque des revendications 1 à 11 et 14, les portes des inverseurs étant situées symétriquement en opposition par rapport au fuselage de l'avion.

Fig. 1

Fig.2

0131079

PL III / 5

Fig. 3

Fig. 4

Fig. 6

Fig. 5

0131079

0131079

Fig. 7

**Office européen des brevets**

**RAPPORT DE RECHERCHE EUROPEENNE**

**0131079**

Numéro de la demande

EP 83 40 1385

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| Y | US-A-4 147 027 (GREATHOUSE)<br><br>* En entier *<br><br>--- | 1-7,9, 11 | F 02 K 1/54 |
| Y | CH-A- 252 053 (HAUSAMMANN)<br>* En entier *<br><br>--- | 1-4 | |
| A | US-A-4 030 687 (HAPKE)<br>* Revendications 1,2; figures 2,3,5,8 *<br><br>--- | 1-9,11 | |
| A | US-A-3 874 620 (KAHLER et al.)<br><br>* Figures 4,6 *<br><br>--- | | |
| A | DE-B-1 129 380 (HAMBURGER FLUGZEUGBAU)<br>* Figures 1,2 *<br><br>--- | | DOMAINES TECHNIQUES RECHERCHES (Int. Cl. 3)<br><br>F 02 K<br>B 64 C |
| A,D | FR-A-2 382 594 (HUREL DUBOIS)<br><br>* Figures 1-4 *<br><br>--- | | |
| A | US-A-2 753 684 (GREENE)<br><br>----- | | |

Le présent rapport de recherche a été établi pour toutes les revendications

| Lieu de la recherche<br>LA HAYE | Date d'achèvement de la recherche<br>06-03-1984 | Examinateur<br>ATTASIO R.M. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82